# EUROPÄISCHE PATENTSCHRIFT

(11) **EP 2 169 258 B1**
(45) Veröffentlichungstag und Bekanntmachung des Hinweises auf die Patenterteilung: **20.07.2011**
(21) Anmeldenummer: 09011105.5
(22) Anmeldetag: 29.08.2009
(51) Int. Cl.: F16F 15/16

(54) **Torsionsschwingungsdämpfer**
Torsion vibration damper
Amortisseur de vibrations de torsion

(30) Priorität: 26.09.2008 DE 202008012811 U
(43) Veröffentlichungstag der Anmeldung: 31.03.2010
(73) Patentinhaber: Asturia Automotive Systems AG, 80538 München (DE)
(72) Erfinder: Freund, Wolfgang, Dr.-Ing., 08428 Langenbernsdorf (DE); Kissler, Andreas, Dipl.-Ing., 08451 Crimmitschau (DE); Schulze, Jürgen, Dipl.-Ing., 09122 Chemnitz (DE)
(74) Vertreter: Rumrich, Gabriele

(56) Entgegenhaltungen:
- EP-A- 0 131 881
- DE-A1- 3 228 673
- DE-A1- 3 325 214
- DE-A1- 3 327 434
- DE-A1- 3 330 080
- DE-A1- 19 628 853
- DE-A1-102005 058 531
- DE-C- 516 627
- DE-U1-202006 016 354
- US-A- 1 472 420
- US-A- 1 489 343

## Beschreibung

Die Erfindung betrifft einen Torsionsschwingungsdämpfer, der zwischen einem Antriebs- und einem Abtriebssystem eingesetzt wird und zur Dämpfung der Eingangs- und Ausgangsschwingungen dient und Drehmomentschwankungen ausgleicht.

Es sind zahlreiche Torsionsschwingungsdämpfer bekannt, bei welchen ein Antriebselement und ein Abtriebselement über eine Torsionsfeder (z.B. DE 10 2005 037 996 B3) zur Drehmomentübertragung verbunden sind.
Es sind weiterhin Systeme bekannt, bei welchem eine Torsionsschwingung mittels radialer oder in Umfangsrichtung beaufschlagbarer Federelemente gedämpft wird (DE 198 12 303 A1, DE 197 33 334 A1)

Aus DE 32 28 673 A1 ist ein Torsionsschwingungsdämpfer mit seitenverschieblichem Dämpfelement bekannt. Der insbesondere für die Kupplungsscheibe einer Kraftfahrzeug-Reibungskupplung geeignete Torsionsschwingungsdämpfer weist zwei relativ zueinander um eine gemeinsame Drehachse verdrehbare Dämpferteile auf, die über eine Axialschubfläche und ein Kuppelteil miteinander gekuppelt sind. Bei Relativdrehung der Dämpferteile verschiebt sich der Kuppelteil gegen die axiale Kraft von Federn. Der Kuppelteil kann mit einem der Dämpferteile axial fest verbunden sein, ist axial verschiebbar, jedoch drehfest mit diesem gekuppelt. Der Kuppelteil unterteilt einen nach außen hin abgedichteten, zumindest teilweise mit Dämpferflüssigkeit gefüllten Raum in zwei Teilräume, die über einen Drosselkanal miteinander verbunden sind.

Nachteil der vorgenannten Lösungen ist der relativ komplizierte fertigungstechnische Aufbau und die für einige Anwendungen noch ungenügenden Dämpfungseigenschaften.

In DE 202006016354 U1 wird eine Einrichtung zum Ausgleich und/oder zur Übertragung von Kräften/Momenten und Drehbewegungen zwischen zwei Bauteilen beschrieben, wobei wenigstens ein Gelenkmodul zwischen den Bauteilen angeordnet ist, der ein Gehäuse aufweist, in dem ein Kolben angeordnet ist, der den Innenraum des Gehäuses in zwei druckmittelbeaufschlagbare Teilräume unterteilt und über gelenkig gelagerte Koppelelemente mit dem ersten und dem zweiten Bauteil verbunden ist. Ein zusätzliches Dämpfungselement zur Dämpfung von Torsionsschwingungen zwischen den Bauteilen ist nicht vorgesehen, wodurch diese Lösung nicht als Torsionsschwingungsdämpfer einsetzbar ist.

Aufgabe der Erfindung ist es, einen Torsionsdämpfer bzw. Torsionsschwingungsdämpfer zu entwickeln, der einen relativ hohen Drehwinkel ermöglicht, federnde Eigenschaften und einen einfachen konstruktiven Aufbau bei kleinem Bauraum aufweist und für ein breites Anwendungsspektrum einsetzbar ist.

Diese Aufgabe wird mit den Merkmalen des ersten Patentanspruchs gelöst. Vorteilhafte Ausgestaltungen ergeben sich aus den Unteransprüchen.
Der Torsionsschwingungsdämpfer weist zwei relativ zueinander drehbare Elemente unter Verwendung wenigstens eines Koppelteiles auf, welches in einem Gehäuse zwischen dem ersten Element und dem zweiten Element axial verschiebbar angeordnet ist, wobei das erste Element mit dem Koppelteil über erste schwenkbar gelagerte starre Koppelelemente und das zweite Element mit dem Koppelteil über zweite schwenkbar gelagerte starre Koppelelemente verbunden ist, wobei durch das Koppelelement das Gehäuse in einen ersten Druckraum/Teilraum und ein zweiten Druckraum/Teilraum unterteilt ist, und der erste Druckraum eine Verbindung zu einem ersten Dämpfungsraum und der zweite Druckraum eine Verbindung zu einem zweiten Dämpfungsraum aufweist und der erste Druckraum sowie der erste Dämpfungsraum mit einem ersten Dämpfungsmedium und der zweite Druckraum sowie der zweite Dämpfungsraum mit einem zweiten Dämpfungsmedium gefüllt sind.
Durch das erste und das zweite Dämpfungselement in Verbindung mit dem Koppelteil und den Koppelelementen werden die verschiedensten Schwingungen zwischen dem ersten Element und dem zweiten Element gedämpft.
Dabei ist wenigstens die Verbindung vom ersten Druckraum/Teilraum zum ersten Dämpfungsraum in Form einer ersten Drosselbohrung und die Verbindung vom zweiten Druckraum/Teilraum zum zweiten Dämpfungsraum in Form einer zweiten Drosselbohrung ausgebildet ist.
Bevorzugt sind das erste und das zweite Dämpfungsmedium gleich, wobei bevorzugt Gas/Luft als Dämpfungsmedium eingesetzt wird.
Weiterhin kann als erstes und zweites Dämpfungsmedium eine Flüssigkeit oder ein Flüssigkeits-Gasgemisch eingesetzt werden.

Das sich in den Teilräumen befindliche erste und zweite Dämpfungsmedium kann auch ein Gel oder ein viskoelastisches Medium sein ist.

Der erste und der zweite Dämpfungsraum umringen bevorzugt das Gehäuse, wobei in dem ersten Dämpfungsraum zusätzlich ein erstes Dämpfungselement und in dem zweiten Dämpfungsraum zusätzlich ein zweites Dämpfungselement angeordnet ist.

Das erste und das zweite Dämpfungselement sind dabei elastisch verformbar/komprimierbar.

Bevorzugt sind das erste und das zweite Dämpfungselement bei Druckbeaufschlagung durch das erste/zweite Dämpfungsmedium elastisch kompressibel/komprimmierbar. Dazu sind erste und das zweite Dämpfungselement insbesondere in Form wenigstens eines elastischen Körpers, bevorzugt in Form eines mit einem komprimierbaren Medium (z.B. Gas/Luft) gefüllten Schlauches, ausgebildet. Als Schlauch wird dabei z.B. ein Elastomerschlauch verwendet, wobei das erste und das zweite Dämpfungselement bevorzugt das Gehäuse umringen.
Es ist auch möglich, die Teilräume miteinander zu verbinden, so dass das Medium aus einem Teilraum in den anderen Teilraum strömen kann. Dies erfolgt bevorzugt unter Einsatz eines entsprechenden Ventils.
Die Koppelelemente sind bevorzugt in Form von Kugelstangen ausgebildet, die an beiden Enden am ersten und zweiten Element und am Koppelteil drehgelenkig gelagert sind. Das Koppelteil ist dabei im Gehäuse axialbeweglich und drehbeweglich gelagert.
Es ist möglich, dass das erste Element eine erste Welle und das zweite Element das Gehäuse ist. Weiterhin kann sowohl das erste Element als eine erste Welle und das zweite Element als eine zweite Welle ausgebildet bzw. mit den Wellen gekoppelt sein, wobei in diesem Fall das Gehäuse bevorzugt gestellfest ist.

Das erste Element kann beispielsweise ein Antriebselement und das zweite Element ein Abtriebselement sein oder umgekehrt.

Weiterhin ist es möglich, dass die Dämpfungsmedien und oder das Gas in den Druckräumen aktiv druckgesteuert wird und die Schwingungsdämpfung nach einem Steuerungsalgorithmus erfolgt.

Mit der Erfindung wird eine einfache konstruktive Lösung eines Torsionsschwingungsdämpfers geschaffen, welcher flexibel unterschiedlichsten Einsatzgebieten anpassbar ist und mit welchem hervorragende Dämpfungseigenschaften erzielbar, hohe Drehmomentenspitzen abbaubar und große Verdrehwinkel erreichbar sind durch die Kombination eines Dämpfungsmediums mit elastischen Elementen

Die Erfindung wird nachfolgend anhand von Ausführungsbeispielen und zugehörigen Zeichnungen näher erläutert. Es zeigen:
- Fig. 1:: schematische Darstellung eines Torsionsschwingungsdämpfers unter Verwendung von zwei Druckräumen, wobei jedem Druckraum ein Dämpfungsraum mit federnden Elementen zugeordnet ist und beide Dämpfungsräume voneinander getrennt sind.
- Fig. 2:: schematische Darstellung eines Torsionsschwingungsdämpfers unter Verwendung von zwei Druckräumen, wobei jedem Druckraum ein Dämpfungsraum zugeordnet ist und beide Dämpfungsräume in einem gemeinsamen Ringspeicher angeordnet sind, der das Gehäuse umringt.

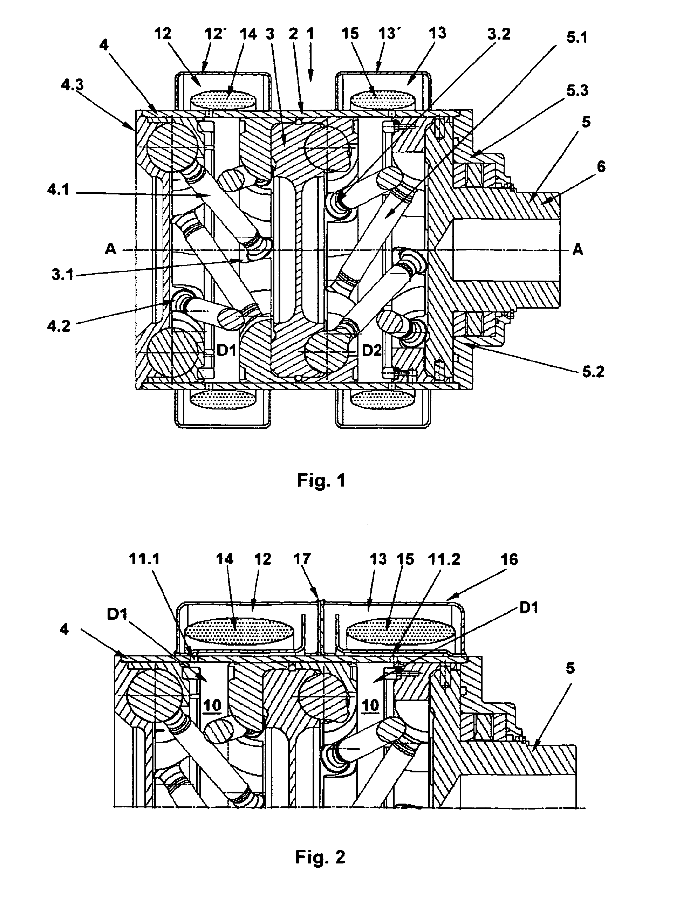

Ein Torsionsschwingungsdämpfer 1, der ein in einem Gehäuse 2 angeordnetes axial verschiebbares Koppelteil 3 und eine Drehwelle 6 aufweist, ist in Fig. 1 und 2 dargestellt. Das Gehäuse 2 bildet das erste Element 4 und weist einen ersten Gehäusedeckel 4.3 auf. Die Drehwelle 6 bildet das zweite Element 5 und ragt durch einen zweiten Gehäusedeckel 5.2. Das Gehäuse 2 (erstes Element 4) und die Drehwelle 6 (zweites Element 5) sind relativ zueinander drehbar. Dazu ist das Gehäuse 2 (erstes Element 4) mit dem Koppelteil 3 über erste drehbeweglich gelagerte starre Koppelelemente 4.1 und die Drehwelle 6 (das zweite Element 5) mit dem Koppelteil 3 über zweite drehbeweglich gelagerte starre Koppelelemente 5.1 verbunden. Die ersten Koppelelemente 4.1 sind in Form von Kugelstangen ausgebildet und mit ihren kugelförmigen Enden einerseits in einer ersten Aufnahme 4.2 des ersten Elementes 4 (am Gehäuse 2) und andererseits in einer Aufnahme 3.1 des Koppelteils 3 drehbeweglich gelagert. Analog sind auch die zweiten Koppelelemente 5.1 in Form von Kugelstangen ausgebildet und mit ihren kugelförmigen Enden einerseits in einer zweiten Aufnahme 5.2 des zweiten Elementes 5 (Drehwelle 6) und andererseits in einer Aufnahme 3.2 des Koppelteils 3 schwenkbar und drehbeweglich gelagert.
Die ersten und die zweiten Koppelelemente 4.1 und 5.1 nehmen in Bezug auf die Längsachse A des Torsionsschwingungsdämpfers 1 eine räumliche Winkelstellung ein und sind dabei geeignet, zwischen dem ersten und dem zweiten Element (4, 5) Drehmomente zu übertragen.

Zur Torsionsschwingungsdämpfung ist gem. Fig. 1 und 2 zwischen der ersten Aufnahme 4.2 (bzw. dem Gehäusedeckel 4.3) und dem Koppelteil 3 ein erster Druckraum/Teilraum D1 und zwischen der zweiten Aufnahme 5.2 (bzw. der Drehwelle 6) und dem Koppelteil 3 ein zweiter Druckraum/Teilraum D2 ausgebildet. In den Druckräumen D1, D2 befindet sich ein flüssiges Dämpfungsmedium 10, welches über wenigstens eine erste Drosselbohrung 11.1 aus dem ersten Druckraum D1 in einen ersten Dämpfungsraum 12 strömen und aus dem zweiten Druckraum D2 über wenigstens eine zweite Drosselbohrung 11.2 in einen zweiten Dämpfungsraum 13 strömen kann. In dem ersten Druckraum D1 und in dem zweiten Druckraum D2 kann dabei gleiches oder unterschiedliches Dämpfungsmedium 10 vorhanden sein. Der erste Dämpfungsraum 12 ist in einem ersten Ringspeicher 12' ausgebildet, der das Gehäuse 2 umringt und der zweite Dämpfungsraum 13 ist in einem zweiten Ringsspeicher 13' ausgebildet, der ebenfalls das Gehäuse 2 umringt, beide Ringspeicher 12', 13' sind voneinander beabstandet.

In dem ersten Ringspeicher 12' befindet sich weiterhin ein erstes Dämpfungselement 14 und in dem zweiten Ringspeicher 13' ein zweites Dämpfungselement 15. Beide Dämpfungselemente 14, 15 sind in Form eines Gas- bzw. luftgefüllten Schlauches oder eines elastischen Elementes, das z.B. ein Elastomer sein kann, ausgebildet.
Im Unterschied zu Fig. 1 sind in dem Teilschnitt nach Fig. 2 der erste und der zweite Dämpfungsraum 12, 13 unmittelbar nebeneinander in einem gemeinsamen Ringspeicher 16 angeordnet, der eine Trennwand 17 aufweist.
Als Dämpfungsmedium kann Gas, ein Gasgemisch oder ein Flüssigkeits-Gas-Gemisch oder ein Gel eingesetzt werden.

Werden das Gehäuse 2 (erstes Element 4) und die Drehwelle 6 (zweites Element 5) relativ zueinander verdreht, so nehmen die Koppelelemente 5.1, 5.2 eine andere räumliche Winkelstellung ein und das Koppelteil 3 wird entlang der Längsachse A gem. Fig. 1 entgegen der Dämpfungskraft des Dämpfungsmediums 10 bewegt. Dabei vollführt das Koppelteil 3 ebenfalls eine Drehbewegung.
Durch die Koppelelemente 5.1, 5.2 und die Elastizität der Dämpfungselemente 14, 15 werden die Torsionsschwingungen zwischen dem ersten Element 4 und dem zweiten Element 5 gedämpft und Drehmomentspitzen abgebaut.
Gemäß einer nicht dargestellten Ausführungsvariante ist es auch möglich, z.B. das erstes und das zweites Element 4. 5 drehbar (in Form von zwei Drehwellen), die im Gehäuse 2 drehbar aufgenommen sind, auszubilden. Das Gehäuse 2 ist dann selbstverständlich gestellfest gelagert.

### Bezugszeichenliste

- 1: Torsionsschwingungsdämpfer
- 2: Gehäuse
- 3: Koppelteil
- 4: erstes Element
- 4.1: erste Koppelelemente
- 4.2: erste Aufnahme
- 4.3: erster Gehäusedeckel
- 5: zweites Element
- 5.1: zweite Koppelelemente
- 5.2: zweite Aufnahme
- 5.3: zweiter Gehäusedeckel
- 10: Dämpfungsmedium
- 11.1: erste Drosselbohrung
- 11.2: zweite Drosselbohrung
- 12: erster Dämpfungsraum
- 12': erster Ringspeicher
- 13: zweiter Dämpfungsraum
- 13': zweiter Ringspeicher
- 14: erstes Dämpfungselement
- 15: zweites Dämpfungselement
- 16: gemeinsamer Ringspeicher
- 17: Trennwand
- A: Längsachse
- D1: erster Druckraum
- D2: zweiter Druckraum

## Patentansprüche

1. Torsionsschwingungsdämpfer (1) mit zwei relativ zueinander drehbaren Elementen (4, 5)
- unter Verwendung wenigstens eines Koppelteiles (3), welches in einem Gehäuse (2) axial verschiebbar angeordnet ist,
- wobei durch das Koppelteil (3) das Gehäuse (2) in einen ersten Druckraum/Teilraum (D1) und ein zweiten Druckraum/Teilraum (D2) unterteilt ist,
- wobei der erste Druckraum (D1) eine Verbindung zu einem ersten Dämpfungsraum (12) und
- der zweite Druckraum (D2) eine Verbindung zu einem zweiten Dämpfungsraum (13) aufweist und
- der erste Druckraum (D1) mit einem Dämpfungsmedium (10)
- sowie der erste Dämpfungsraum (12) mit dem Dämpfungsmedium (10) und/oder einem ersten Dämpfungselement (14) und
- der zweite Druckraum (D2) mit einem Dämpfungsmedium (10)
- sowie der zweite Dämpfungsraum (13) mit dem Dämpfungsmedium (10) und/oder einem zweiten Dämpfungselement (15)
gefüllt sind.

2. Torsionsschwingungsdämpfer nach Anspruch 1, **dadurch gekennzeichnet, dass** wenigstens die Verbindung vom ersten Druckraum/Teilraum (D1) zum ersten Dämpfungsraum (12) in Form einer ersten Drosselbohrung (11.1) und die Verbindung vom zweiten Druckraum/Teilraum (D2) zum zweiten Dämpfungsraum (13) in Form einer zweiten Drosselbohrung (11.2) ausgebildet ist.

3. Torsionsschwingungsdämpfer nach Anspruch 1 oder 2, **dadurch gekennzeichnet, dass** das Dämpfungsmedium (10)
- Gas/Luft oder.
- eine Flüssigkeit oder
- ein Flüssigkeits-Gasgemisch oder
- ein Gel oder
- ein viskoelastisches Medium
ist.

4. Torsionsschwingungsdämpfer nach einem der Ansprüche 1 bis 3, **dadurch gekennzeichnet, dass** der erste Dämpfungsraum (12) und der zweite Dämpfungsraum (13) und/oder dass erste und das zweite Dämpfungselement (14, 15) das Gehäuse (2) umringen.

5. Torsionsschwingungsdämpfer nach einem der Ansprüche 1 bis 4, **dadurch gekennzeichnet, dass** das erste und das zweite Dämpfungselement (14, 15) elastisch verformbar/komprimierbar sind.

6. Torsionsschwingungsdämpfer nach Anspruch 5, **dadurch gekennzeichnet, dass** das erste und das zweite Dämpfungselement (14, 15) bei Druckbeaufschlagung durch das Dämpfungsmedium (10) elastisch kompressibel/komprimmierbar sind.

7. Torsionsschwingungsdämpfer nach Anspruch 5 oder 6, **dadurch gekennzeichnet, dass** das erste und das zweite Dämpfungselement (14, 15) in Form wenigstens eines elastischen Körpers ausgebildet sind.

8. Torsionsschwingungsdämpfer nach einem der Ansprüche 5 bis 7, **dadurch gekennzeichnet, dass** der elastische Körper ein mit Gas/Luft gefüllter Schlauch ist oder ein Elastomerschlauch ist.

9. Torsionsschwingungsdämpfer nach einem der Ansprüche 1 bis 8, **dadurch gekennzeichnet, dass** die beiden Druckräume (D1, D2) miteinander insbesondere über ein Ventil verbindbar sind.

10. Torsionsschwingungsdämpfer nach einem der Ansprüche 1 bis 9, **dadurch gekennzeichnet, dass** das erste Element (4) mit dem Koppelteil (3) über erste schwenkbar gelagerte starre Koppelelemente (4.1) und das zweite Element (5) mit dem Koppelteil (3) über zweite schwenkbar gelagerte starre Koppelelemente (5.1) verbunden ist, wobei die Koppelelemente (4.1, 5.1) in Form von Kugelstangen ausgebildet sind, die an beiden Enden gelenkig/drehgelenkig gelagert sind und das Koppelteil (3) im Gehäuse (2) axialbeweglich und drehbeweglich angeordnet ist.

11. Torsionsschwingungsdämpfer nach einem der Ansprüche 1 bis 10, **dadurch gekennzeichnet, dass** das erste Element (4) eine erste Welle und das zweite Element (5) das Gehäuse (2) ist.

12. Torsionsschwingungsdämpfer nach einem der Ansprüche 1 bis 11, **dadurch gekennzeichnet, dass** das erste Element (4) eine erste Welle und das zweite Element (5) eine zweite Welle ist, wobei das Gehäuse (2) insbesondere gestellfest angeordnet ist.

13. Torsionsschwingungsdämpfer nach einem der Ansprüche 1 bis 12, **dadurch gekennzeichnet, dass** das erste Element (4) ein Antriebselement und das zweite Element (5) ein Abtriebselement ist oder umgekehrt.

14. Torsionsschwingungsdämpfer nach einem der Ansprüche 1 bis 13, **dadurch gekennzeichnet, dass** das erste Element (4) mit einer ersten Welle oder einem Antriebselement gekoppelt ist und/oder dass das zweite Element (5) mit einer zweiten Welle oder einem Abtriebselement gekoppelt ist.

15. Torsionsschwingungsdämpfer nach einem der Ansprüche 1 bis 14, **dadurch gekennzeichnet, dass** die Dämpfungsmedien (10) und oder das Gas in den Dämpfungselementen aktiv druckgesteuert wird und die Schwingungsdämpfung/Torsionschwingungsdämpfung nach einem Steuerungsalgorithmus erfolgt.

## Claims

1. A torsional vibration damper (1), comprising two elements (4, 5) that are rotatable relative to one another
- by using at least one coupling part (3) which is arranged in a housing (2) in an axially displaceable manner;
- with the housing (2) being subdivided by the coupling part (3) into a first pressure chamber/compartment (D1) and a second pressure chamber/compartment (D2);
- with the first pressure chamber (D1) having a connection to a first damping chamber (12), and
- the second pressure chamber (D2) having a connection to a second damping chamber (13), and
- the first pressure chamber (D1) being filled with a damping medium (10);
- and the first damping chamber (12) being filled with the damping medium (10) and/or a first damping element (14), and
- the second pressure chamber (D2) with a damping medium (10);
- and the second damping chamber (13) with the damping medium (10) and/or a second damping element (15).

2. A torsional vibration damper according to claim 1, **characterized in that** at least the connection from the first pressure chamber/compartment (D1) to the first damping chamber (12) is provided in form of a first throttle bore (11.1) and the connection from the second pressure chamber/compartment (D2) to the second damping chamber (13) in form of a second throttle bore (11.2).

3. A torsional vibration damper according to claim 1 or 2, **characterized in that** the damping medium (10) is
- gas/air or
- a fluid or
- a mixture of fluid and gas or
- a gel or
- a viscoelastic medium.

4. A torsional vibration damper according to one of the claims 1 to 3, **characterized in that** the first damping chamber (12) and the second damping chamber (13) and/or the first and second damping element (14, 15) encircle the housing (2).

5. A torsional vibration damper according to one of the claims 1 to 4, **characterized in that** the first and second damping element (14, 15) are elastically deformable/compressible.

6. A torsional vibration damper according to claim 5, **characterized in that** the first and second damping element (14, 15) are elastically compressible upon pressurization by the damping medium (10).

7. A torsional vibration damper according to claim 5 or 6, **characterized in that** the first and second damping element (14, 15) are arranged in form of at least one elastic body.

8. A torsional vibration damper according to one of the claims 5 to 7, **characterized in that** the elastic body is a hose filled with gas/air or an elastomeric hose.

9. A torsional vibration damper according to one of the claims 1 to 8, **characterized in that** the two pressure chambers (D1, D2) are connectible with each other especially via a valve.

10. A torsional vibration damper according to one of the claims 1 to 9, **characterized in that** the first element (4) is connected with the coupling part (3) via first pivotably mounted rigid coupling elements (4.1) and the second element (5) with the coupling part (3) via second pivotably mounted rigid coupling elements (5.1), with the coupling elements (4.1, 5.1) being arranged in form of ball bars which are held at both ends in an articulated/pivotal manner, and the coupling part (3) is arranged in the housing (2) in an axially movable and rotationally movable way.

11. A torsional vibration damper according to one of the claims 1 to 10, **characterized in that** the first element (4) is a first shaft and the second element (5) is the housing.

12. A torsional vibration damper according to one of the claims 1 to 11, **characterized in that** the first element (4) is a first shaft and the second element (5) is a second shaft, with the housing (2) especially being arranged in a fixed manner.

13. A torsional vibration damper according to one of the claims 1 to 12, **characterized in that** the first element (4) is a drive element and the second element (5) is a driven element, or vice versa.

14. A torsional vibration damper according to one of the claims 1 to 13, **characterized in that** the first element (4) is coupled with a first shaft or a drive element and/or the second element (5) is coupled with a second shaft or a driven element.

15. A torsional vibration damper according to one of the claims 1 to 14, **characterized in that** the damping media (10) and/or the gas are actively pressure-controlled in the damping elements, and the vibration damping/torsional vibration damping occurs according to a control algorithm.

## Revendications

1. Amortisseur d'oscillations de torsion (1) avec deux éléments (4, 5) pouvant pivoter l'un par rapport à l'autre,
- en utilisant au moins une partie de couplage (3) qui est disposée dans un boîtier (2) de façon mobile dans le sens axial,
- dans lequel la partie de couplage (3) divise le boîtier (2) en un premier volume de compression/volume partiel (D1) et un deuxième volume de compression/volume partiel (D2),
- dans lequel le premier volume de compression (D1) présente une communication avec un premier volume d'amortissement (12) et
- le deuxième volume de compression (D2) présente une communication avec un deuxième volume d'amortissement (13) et
- le premier volume de compression (D1) est rempli avec un fluide d'amortissement (10)
- et le premier volume d'amortissement (12) est rempli avec le fluide d'amortissement (10) et/ou un premier élément d'amortissement (14) et
- le deuxième volume de compression (D2) est rempli avec un fluide d'amortissement (10)
- et le deuxième volume d'amortissement (13) avec le fluide d'amortissement (10) et/ou un deuxième élément d'amortissement (15).

2. Amortisseur d'oscillations de torsion selon la revendication 1, **caractérisé en ce qu'**au moins la communication entre le premier volume de compression/volume partiel (D1) et le premier volume d'amortissement (12) est réalisée sous la forme d'un premier alésage d'étranglement (11.1) et la communication entre le volume de compression/volume partiel (D2) et le deuxième volume d'amortissement (13) sous la forme d'un deuxième alésage d'étranglement (11.2).

3. Amortisseur d'oscillations de torsion selon la revendication 1 ou 2, **caractérisé en ce que** le fluide d'amortissement (10) est
- un gaz/de l'air ou
- un liquide ou
- un mélange de liquide et de gaz ou
- un gel ou
- une matière viscoélastique.

4. Amortisseur d'oscillations de torsion selon l'une des revendications 1 à 3, **caractérisé en ce que** le premier volume d'amortissement (12) et le deuxième volume d'amortissement (13) et/ou le premier élément d'amortissement et le deuxième (14, 15) entourent le boîtier (2).

5. Amortisseur d'oscillations de torsion selon l'une des revendications 1 à 4, **caractérisé en ce que** le premier élément d'amortissement et le deuxième (14, 15) sont déformables ou compressibles de façon élastique.

6. Amortisseur d'oscillations de torsion selon la revendication 5, **caractérisé en ce que** le premier élément d'amortissement et le deuxième (14, 15) sont déformables ou compressibles de façon élastique s'ils sont soumis à une pression par le fluide d'amortissement (10).

7. Amortisseur d'oscillations de torsion selon la revendication 5 ou 6, **caractérisé en ce que** le premier élément d'amortissement et le deuxième (14, 15) sont réalisés sous la forme d'au moins un corps élastique.

8. Amortisseur d'oscillations de torsion selon l'une des revendications 5 à 7, **caractérisé en ce que** le corps élastique est un tube rempli d'un gaz ou d'air ou un tube en élastomère.

9. Amortisseur d'oscillations de torsion selon l'une des revendications 1 à 8, **caractérisé en ce que** les deux volumes de compression (D1, D2) peuvent être mis en communication l'un avec l'autre, en particulier à l'aide d'une vanne.

10. Amortisseur d'oscillations de torsion selon l'une des revendications 1 à 9, **caractérisé en ce que** le premier élément (4) est relié à la partie de couplage (3) par des premiers éléments de couplage rigides (4.1) supportés de façon basculante et le deuxième élément (5) est relié à la partie de couplage (3) par des deuxièmes éléments de couplage rigides (5.1) supportés de façon basculante, les éléments de couplage (4.1, 5.1) étant formés par des bielles à rotule qui sont supportée de façon articulée ou articulée en rotation aux deux extrémités et la partie de couplage (3) est supportée dans le boîtier (2) de façon mobile dans le sens axial et en rotation.

11. Amortisseur d'oscillations de torsion selon l'une des revendications 1 à 10, **caractérisé en ce que** le premier élément (4) est un premier arbre et le deuxième élément (5) le boîtier (2).

12. Amortisseur d'oscillations de torsion selon l'une des revendications 1 à 11, **caractérisé en ce que** le premier élément (4) est un premier arbre et le deuxième élément (5) un deuxième arbre, le boîtier (2) étant en particulier disposé de façon fixe sur le bâti.

13. Amortisseur d'oscillations de torsion selon l'une des revendications 1 à 12, **caractérisé en ce que** le premier élément (4) est un élément d'entraînement et le deuxième élément (5) un élément de sortie ou vice versa.

14. Amortisseur d'oscillations de torsion selon l'une des revendications 1 à 13, **caractérisé en ce que** le premier élément (4) est couplé à un premier arbre ou un élément d'entraînement et/ou **en ce que** le deuxième élément (5) est couplé à un deuxième arbre ou à un élément de sortie.

15. Amortisseur d'oscillations de torsion selon l'une des revendications 1 à 14, **caractérisé en ce que** les fluides d'amortissement (10) et/ou le gaz dans les éléments d'amortissement sont régulés activement en pression et l'amortissement des oscillations ou l'amortissement des oscillations de torsion est réalisé selon un algorithme de régulation.
